Europäisches Patentamt

**European Patent Office**

**Office européen des brevets**

(11) Publication number: **0 010 356**

A1

## (12) EUROPEAN PATENT APPLICATION

(21) Application number: **79301924.1**

(22) Date of filing: **18.09.79**

(51) Int. Cl.³: **B 29 D 31/00**

(30) Priority: **22.09.78 GB 3784778**

(43) Date of publication of application:
**30.04.80 Bulletin 80/9**

(84) Designated Contracting States:
**AT BE CH DE FR IT LU NL SE**

(71) Applicant: **TUNNEL BUILDING PRODUCTS LIMITED**
**London Road**
**Grays Essex, RM16 1EJ(GB)**

(72) Inventor: **Adams, Eric William George**
**c/o Tunnel Buildings Products Limited London Road**
**Grays Essex(GB)**

(74) Representative: **Daley, M. J. et al,**
**F.J.CLEVELAND & COMPANY 40/43 Chancery Lane**
**London WC2A 1JQ(GB)**

(54) **Method and apparatus for spreading cellular material such as fibrillated polypropylene nets.**

㊼ A cellular mat, for example of fibrillated polypropylene, is made by laterally spreading a relatively thin filamentary strip (6). The spreading is achieved by passing the strip through an expansion device (11) with upper and lower clamping members (12 and 13). Jet nozzles (22) in clamping member (12) direct water laterally outwardly to spread the strip. The mat produced is used as a reinforcement for cement or concrete.

*Fig.1*

*Fig.2*

This invention relates to the lateral expansion of cellular material. The invention has particular but not exclusive application to the production of a cellular mat of fibrillated polypropylene for use as a reinforcement in cement or concrete. Fibrillated polypropylene is commercially obtainable as a relatively narrow tape or strip which has to be laterally expanded to provide a useful reinforcement mat.

In accordance with the present invention the width of a piece of cellular material is increased by the lateral flow of fluid contacting the piece.

Preferably the piece is confined between clamping members and fluid injected into the confined space between the members so as to flow outwardly in each lateral direction from the longitudinal centre of the piece.

The process in accordance with the present invention is preferably a continuous process involving dispensing cellular strip material continuously, for example from a reel and passing the strip through an expansion device to produce a relatively wide mat.

An expansion device in accordance with the invention comprises upper and lower clamping members and nozzles in at least one of the members through which fluid can be injected so as to flow laterally outwardly from the longitudinal centre of the pieces.

The invention will now be described by way of example and with reference to the accompanying drawings wherein :-

Figure 1 is a perspective view of an apparatus in accordance with the invention;

Figure 2 is a plan view of the lower part of the upper member of a clamping device in the apparatus of Figure 1; and

Figure 3 is a sectional view on an enlarged scale of part of the clamping device.

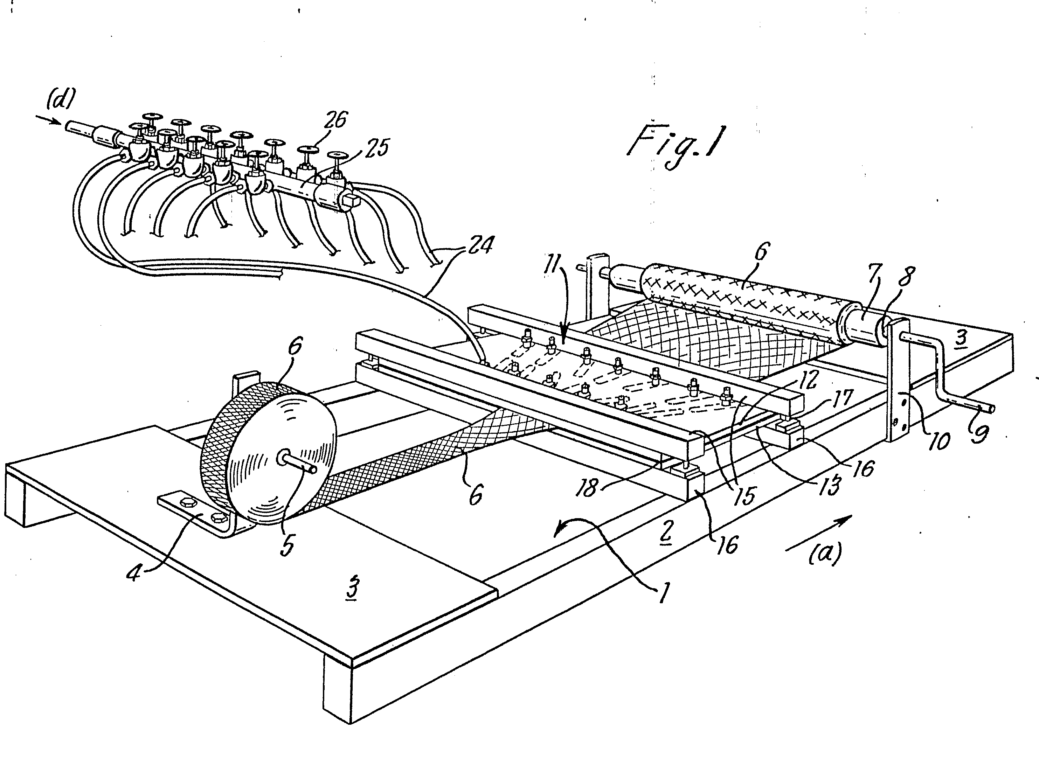

Referring now to Figure 1 of the drawings the apparatus shown comprises a support frame 1 having longitudinal members 2 and cross members 3. Cellular material moves through the device from rear to front in the direction of the arrow (a). On the rearmost of the cross members 3 there is mounted on a bracket 4 and spindle 5 a reel of

- 3 -

of cellular strip material 6, for example fibrillated polypropylene. The material 6 is wound as a
laterally expanded mat with enlarged interstices
onto a roller 7 at the front end of the frame 1,
the roller 7 being carried on an axle 8 with a handle
crank 9 at one end. The axle 8 is supported on
uprights 10. In use when the handle 9 is turned
counterclockwise the strip of material 6 is drawn
off the reel and through an expansion device 11 to
be converted to the relatively wide mat to be wound
on roller 7. The expansion device 11 comprises
upper and lower members 12 and 13. Upper and
lower clamping bars 15 and 16 are secured together
in clamping relationship by threaded members 17
so as to be adjustable to bear upon material 6
passing through the expansion device and to define
a confined space 18 (see Figure 3).

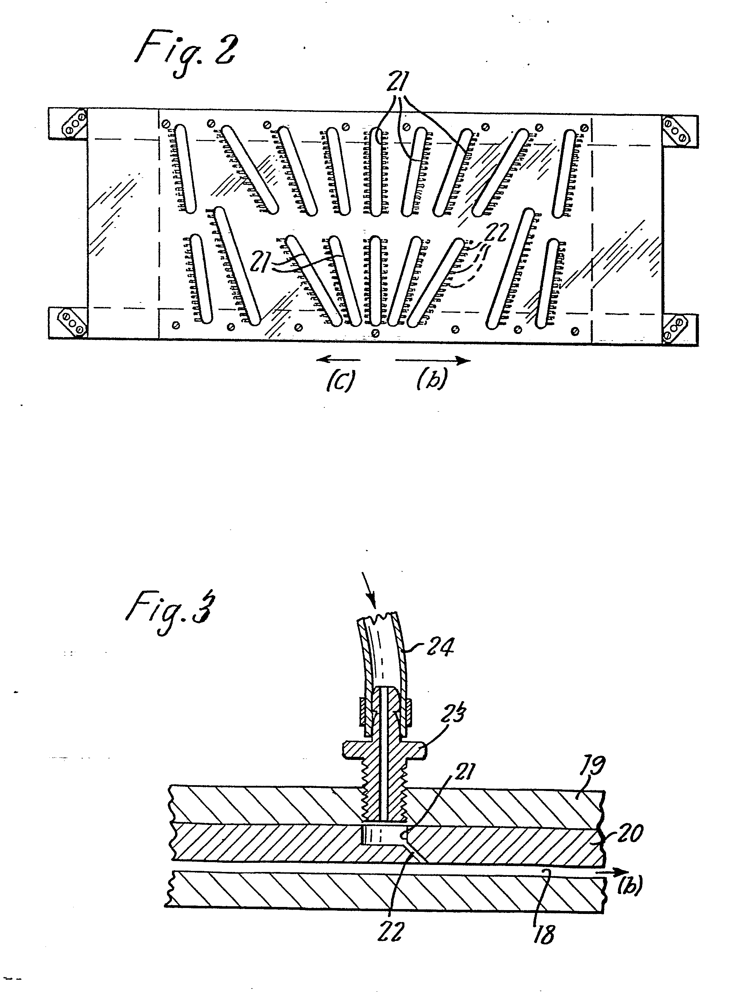

As can be seen in Figure 3 the upper
clamping member comprises upper and lower contacting plates 19 and 20. An array of elongate channels
21 as shown in Figure 2 is provided in the lower
plate 20 each channel communicating by a jet 22
inclined downwardly and laterally outwardly from the
longitudinal centre with the confined space 18.

- 4 -

Consideration of Figures 2 and 3 shows how the
channels 21 and jets 22 are so disposed and arranged
as to cause laterally outward flow of liquid discharged into the channels in the directions (b) and
(c). Immediately above each channel 21 in the upper
plate 19 is screwed a connecting nozzle 23 which in
turn is connected to an individual pipe 24 to a manifold 25 with a plurality of control taps 26.

In use a liquid, conveniently water, is caused
to flow under moderate pressure in the direction of
arrow (b) into the manifold 25, through pipes 24
and jets 23 into channels 21 and then through jets
22 into space 18. The water under pressure then flows
laterally outwardly in the direction of arrows (b)
and (c) as indicated in Figure 3. The relatively narrow strip part 6 moving through the expansion device
on entry has the laterally outwardly moving liquid
impinging on the interstices of the netting thereby
exerting forces sufficient to expand the relatively
narrow strip entering the device into the relatively
wide matting leaving the device. A plurality of
strips 6 can be passed, one on top of another, through
the apparatus.

A proposed modification has an expansion device comprising a multi-layer assembly of clamping members whereby more than one strip to be laterally expanded can be advanced simultaneously.

As mentioned above the expanded matting finds use for the reinforcement of cement or concrete and a continuous process is envisaged whereby instead of the expanded mat being reeled onto a member such as the roller 17 it is guided into and through a slurry of cement or concrete.

## CLAIMS

1.  A method of manufacturing a cellular mat which comprises taking a strip 6 of cellular material and causing fluid to flow laterally outwardly from a position on the strip, the moving fluid impinging on the interstices of the strip laterally to expand the strip into a mat.

2.  A method as claimed in Claim 1 wherein the strip is confined between clamping members 12 and 13 and fluid is injected into the space 18 between the members to flow laterally outwardly to expand the strip.

3.  A method as claimed in either Claim 1 or Claim 2 which is a continuous method the strip being dispersed from a reel and the mat being wound onto a roller 7.

4.  A method as claimed in any of the preceding claims wherein the fluid is water.

5.    A method as claimed in any of the preceding claims wherein the cellular material is fibrillated polypropylene and the mat is used for reinforcing cement or concrete.

6.    Apparatus for carrying out a method as claimed in Claim 1 comprising upper and lower clamping members 12 and 13 and jet nozzles 22 in at least one of the clamping members through which the fluid is injected to flow laterally outwardly from a central position.

*Fig.1*

**Fig. 2**

(c) ← → (b)

**Fig. 3**

0010356

<table>
<tr><th colspan="2"></th><th>European Patent<br>Office</th><th>EUROPEAN SEARCH REPORT</th><th>Application number</th></tr>
</table>

| | | | |
|---|---|---|---|

**EP 79 301 924.1**

<table>
<tr>
<th colspan="3">DOCUMENTS CONSIDERED TO·BE RELEVANT</th>
<th>CLASSIFICATION OF THE<br>APPLICATION (Int. Cl.3)</th>
</tr>
<tr>
<td>Category</td>
<td>Citation of document with indication, where appropriate, of relevant passages</td>
<td>Relevant to claim</td>
<td rowspan="5">B 29 D   31/00</td>
</tr>
<tr>
<td></td>
<td>US – A – 3 806 390 (H. BALK  et al.)<br>* column 2, lines 59 to 66; fig. 1 *<br>---</td>
<td>1,3</td>
</tr>
<tr>
<td></td>
<td>CH – A5 – 592 219 (ARNHEITER AG)<br>* claims I, III; subclaims 9, 11, 21 *<br>---</td>
<td>5</td>
</tr>
<tr>
<td></td>
<td>CH – A5 – 562 937 (ARNHEITER AG)<br>* column 2, lines 44 to 49; claim I;<br>subclaim 6 *<br>---</td>
<td>5</td>
</tr>
<tr>
<td>A</td>
<td>DE – B – 2 162 780 (LENTIA GMBH)<br>* claims 1, 2; fig. 1, 2 *<br>---</td>
<td></td>
</tr>
<tr>
<td>A</td>
<td>US – A – 3 490 663 (B. SKINNER)<br>* column 2, lines 12 to 52; fig. 1 *<br>----</td>
<td></td>
<td>TECHNICAL FIELDS<br>SEARCHED (Int.Cl.3)<br><br>B 29 C   17/10<br>B 29 D   27/00<br>B 29 D   31/00<br>E 04 C    5/00</td>
</tr>
<tr>
<td colspan="3"></td>
<td>CATEGORY OF<br>CITED DOCUMENTS<br><br>X: particularly relevant<br>A: technological background<br>O: non-written disclosure<br>P: intermediate document<br>T: theory or principle underlying<br>the invention<br>E: conflicting application<br>D: document cited in the<br>application<br>L: citation for other reasons<br><br>&: member of the same patent<br>family,<br>corresponding document</td>
</tr>
<tr>
<td>X</td>
<td colspan="2">The present search report has been drawn up for all claims</td>
<td></td>
</tr>
<tr>
<td>Place of search<br>Berlin</td>
<td colspan="2">Date of completion of the search<br>23-01-1980</td>
<td>Examiner<br>BRUCK</td>
</tr>
</table>

EPO Form 1503.1   06.78